# EUROPÄISCHE PATENTANMELDUNG

(11) **EP 3 431 889 A1**
(43) Veröffentlichungstag der Anmeldung: **23.01.2019**
(21) Anmeldenummer: 18182787.4
(22) Anmeldetag: 10.07.2018
(51) Int. Cl.: F24D 19/10

(54) **VERSORGUNGSKREIS FÜR EIN WÄRMETRÄGERMEDIUM FÜR EINEN VERBRAUCHER, INDUSTRIEANLAGE UND VERFAHREN ZUM BETREIBEN VON SOLCHEN**

(30) Priorität: 18.07.2017 DE 102017116079
(71) Anmelder: Eisenmann SE, 71032 Böblingen (DE)
(72) Erfinder: Rauser, Wolfgang, 72224 Ebhausen (DE)
(74) Vertreter: Ostertag & Partner Patentanwälte mbB

(57) **Zusammenfassung**

Ein Versorgungskreis für ein Wärmeträgermedium (12) für einen Verbraucher (16) umfasst eine Vorlaufleitung (46) für das Wärmeträgermedium (12) und eine Rücklaufleitung (50) für das Wärmeträgermedium (12), welche durch einen Verbraucher-Wärmetauscher (44) miteinander verbunden sind. Eine Pumpeinrichtung zum Fördern des Wärmeträgermediums (12) durch den Versorgungskreis ist eine frequenzgeregelte Pumpeinrichtung (58) mit einer Förderpumpe (60) und einem der Förderpumpe (60) zugeordneten Frequenzumrichter (62). Bei einer Industrieanlage (10) ist ein Primärkreis (14) mit einem solchen Versorgungskreis als Sekundärkreis (18) verbunden. Bei einem Verfahren wird der Versorgungskreis wahlweise in einem von zwei Betriebsmodi betrieben wird, wobei in einem ersten Betriebsmodus die Temperatur des Wärmeträgermediums (12), welches aus der Vorlaufleitung (46) in den Verbraucher-Wärmetauscher (44) eintritt, durch eine Beimischregelung eingestellt wird, bei welcher die Temperatur des Wärmeträgermediums (12), welches aus der Vorlaufleitung (46) in den Verbraucher-Wärmetauscher (44) eintritt, durch eine Ansteuerung des Ventils (54) eingestellt wird, und in einem zweiten Betriebsmodus die Temperatur des Wärmeträgermediums (12), welches aus der Vorlaufleitung (46) in den Verbraucher-Wärmetauscher (44) eintritt, durch eine Volumenstromregelung eingestellt wird, indem der Frequenzumrichter (62) der Pumpeinrichtung (58) angesteuert wird.

## Beschreibung

Die Erfindung betrifft einen Versorgungskreis für ein Wärmeträgermedium für einen Verbraucher mit
a) einer Vorlaufleitung für das Wärmeträgermedium und einer Rücklaufleitung für das Wärmeträgermedium, welche durch einen Verbraucher-Wärmetauscher miteinander verbunden sind;
b) einer Pumpeinrichtung zum Fördern des Wärmeträgermediums durch den Versorgungskreis.

Außerdem betrifft die Erfindung eine Industrieanlage mit einem Primärkreis für ein Wärmeträgermedium, welcher mit wenigstens einem Sekundärkreis für das Wärmeträgermedium für einen Verbraucher verbunden ist, wobei eine Vorlaufleitung des Sekundärkreises mit einer Vorlaufleitung des Primärkreises und eine Rücklaufleitung des Sekundärkreises mit einer Rücklaufleitung des Primärkreises verbunden ist, sowie ein Verfahren zum Betreiben eines Versorgungskreises oder einer Industrieanlage.

In Industrieanlagen gibt es in bekannter Art und Weise Verteilstränge für ein Wärmeträgermedium, die einen Primärkreis für das Wärmeträgermedium bilden, mittels welchem an Verbraucher mit Hilfe von dortigen Verbraucher-Wärmetauschern Wärmeenergie übertragen werden kann. Abhängig von der Richtung der Wärmeübertragung kann das Wärmeträgermedium für einen Kühlvorgang oder einen Heizvorgang genutzt werden. In der Regel ist das Wärmeträgermedium Wasser, ein anderes häufig genutztes Wärmeträgermedium ist beispielsweise Glykol oder ein Gemisch aus Wasser und Glykol.

Bei bekannten Versorgungskreisen gibt die Pumpeinrichtung einen konstanten und unveränderlichen Volumenstrom des Wärmeträgermediums durch den Verbraucher bzw. durch dessen Verbraucher-Wärmetauscher vor und es erfolgt eine sogenannte Beimischregelung, indem die Vorlaufleitung einerseits aus dem Primärkreis und andererseits aus der Rücklaufleitung gespeist wird. In diesem Fall muss stets für einen gewissen Mindestdruck in dem Primärkreis gesorgt werden, wozu eine oder mehrere Netzpumpen in dem Primärkreis vorgesehen sind, welche einen verhältnismäßig hohen Wartungsaufwand bedeuten.

Zudem benötigen diese Versorgungskreise zu jedem Betriebszustand weitgehend die gleiche Energie, ohne dass sich zum Beispiel bei Heizvorgängen eine Änderung am Bedarf an Wärmeenergie am Verbraucher in einem verringerten Energiebedarf des Versorgungskreises niederschlägt.

Es ist Aufgabe der Erfindung, einen Versorgungskreis und ein Verfahren zum Betreiben eines Versorgungskreises der eingangs genannten Art bereitzustellen, welche eine verbesserte Energiebilanz zulassen.

Diese Aufgabe wird bei einem Versorgungkreis der eingangs genannten Art dadurch gelöst, dass
c) die Pumpeinrichtung eine frequenzgeregelte Pumpeinrichtung mit wenigstens einer Förderpumpe und einem der Förderpumpe zugeordneten Frequenzumrichter ist.

Die Verwendung einer frequenzgeregelten Pumpeinrichtung eröffnet bislang nicht mögliche Betriebsweisen, bei denen der Energiebedarf für den Betrieb des Versorgungskreises mit dem Energiebedarf am Verbraucher korreliert werden kann. Insbesondere kann die Förderleistung der Förderpumpe variiert werden, wodurch der Volumenstrom des Wärmeträgermediums durch den Verbraucher-Wärmetauscher an den dortigen Bedarf angepasst werden kann.

Es ist von Vorteil, wenn die Vorlaufleitung und die Rücklaufleitung durch eine Zirkulationsleitung miteinander verbunden sind, derart, dass Wärmeträgermedium aus der Rücklaufleitung im Kreislauf in die Vorlaufleitung führbar ist. Auf diese Weise kann das Wärmeträgermedium erneut genutzt werden, ohne dass es beispielsweise unmittelbar wieder in den oben angesprochenen Primärkreis zurückgeführt wird.

Dabei ist es günstig, wenn ein Ventil vorhanden ist, mittels welchem der Anteil des Wärmeträgermediums, welches durch die Zirkulationsleitung in die Vorlaufleitung strömt, einstellbar ist.

Dieses Ventil kann zwar auch in der Rücklaufleitung angeordnet sein, es ist jedoch strömungstechnisch vorteilhaft, wenn das Ventil in der Zirkulationsleitung angeordnet ist.

Es ist außerdem von Vorteil, wenn die Zirkulationsleitung stromauf der Förderpumpe in die Vorlaufleitung mündet. So wird das aus der Zirkulationsleitung in die Vorlaufleitung strömende Wärmeträgermedium effektiv von der Förderpumpe gefördert und zugleich eine gute Durchmischung des bereits in der Vorlaufleitung befindlichen Wärmeträgermediums mit dem Wärmeträgermedium aus der Zirkulationsleitung gewährleistet.

Vorzugsweise sind die frequenzgeregelte Pumpeinrichtung und/oder das Ventil mittels einer Steuereinrichtung ansteuerbar.

Eine effektive Anpassung der Betriebsmodi des Versorgungskreises abhängig von dem Bedarf am Verbraucher kann besonders dann erfolgen, wenn die Steuereinrichtung mit einem Sensorsystem verbunden ist, mittels welchem der Eingangsdruck des Wärmeträgermediums auf der Einlassseite der Förderpumpe und/oder der Ausgangsdruck des Wärmeträgermediums auf der Auslassseite der Förderpumpe und/oder die Temperatur des Wärmeträgermediums in der Vorlaufleitung auf der Einlassseite des Verbraucher-Wärmetauschers und/oder die Temperatur des Wärmeträgermediums in der Rücklaufleitung an der Auslassseite des Verbraucher-Wärmetauschers erfassbar ist und die zugehörigen Sensorantworten an die Steuereinrichtung übertragbar sind.

Damit die Steuereinrichtung die Wirkung der Regelvorgänge erfassen kann, ist es günstig, wenn die Steuereinrichtung mit einem Verbraucher-Sensorsystem verbindbar ist, mittels welchem wenigstens ein Betriebsparameter des Verbrauchers erfassbar und an die Steuereinrichtung übertragbar ist.

Die oben genannte Aufgabe wird bei einer Industrieanlage der eingangs genannten Art dadurch gelöst, dass der Sekundärkreis ein Versorgungskreis mit einigen oder allen der oben erläuterten Merkmale ist.

Die oben genannte Aufgabe wird bei einem Verfahren der eingangs genannten Art bei einem Versorgungskreis mit frequenzgeregelter Pumpeinrichtung und Ventilsteuerung für die Zirkulationsleitung dadurch erreicht, dass der Versorgungskreis wahlweise in einem von zwei Betriebsmodi betrieben wird, wobei
a) in einem ersten Betriebsmodus die Temperatur des Wärmeträgermediums, welches aus der Vorlaufleitung in den Verbraucher-Wärmetauscher eintritt, durch eine Beimischregelung eingestellt wird, bei welcher die Temperatur des Wärmeträgermediums, welches aus der Vorlaufleitung in den Verbraucher-Wärmetauscher eintritt, durch eine Ansteuerung des Ventils eingestellt wird;
b) in einem zweiten Betriebsmodus die Temperatur des Wärmeträgermediums, welches aus der Vorlaufleitung in den Verbraucher-Wärmetauscher eintritt, durch eine Volumenstromregelung eingestellt wird, indem der Frequenzumrichter der Pumpeinrichtung angesteuert wird.

Ergänzend ist es günstig, wenn in einem dritten Betriebsmodus die Temperatur des Wärmeträgermediums, welches aus der Vorlaufleitung in den Verbraucher-Wärmetauscher eintritt, durch eine Kombinationsregelung eingestellt wird, bei welcher die Beimischregelung und die Volumenstromregelung miteinander kombiniert werden.

Nachfolgend werden Ausführungsbeispiele der Erfindung anhand der Zeichnungen näher erläutert. In diesen zeigen:

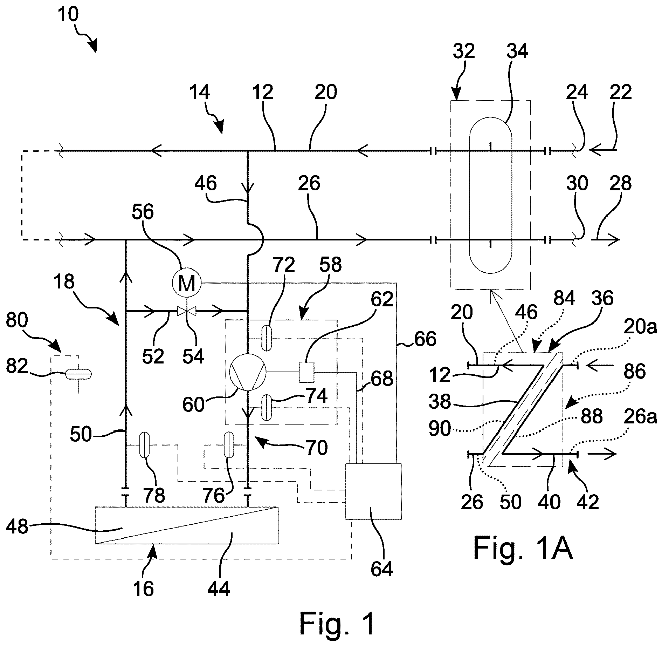

Figur 1 ein schematisches Layout einer Industrieanlage;
Figur 1A eine Teilabwandlung der Industrieanlage nach Figur 1.

In Figur 1 bezeichnet 10 eine Industrieanlage, bei welcher ein Wärmeträgermedium 12 in einem Primärkreis 14 geführt wird, welches nachfolgend als HT-Medium 12 ("Heat Transfer Medium") 12 bezeichnet wird. Das HT-Medium 12 wird einem oder mehreren Verbrauchern 16 zur Verfügung gestellt, die über einen jeweiligen Sekundärkreis 18 mit dem Primärkreis 14 verbunden sind. In den Figuren 1 und 2 ist der Übersichtlichkeit halber jeweils nur ein einziger Verbraucher 16 in einem Sekundärkreis 18 gezeigt. Die Strömungsrichtung des HT-Mediums 12 in dem Primär- und Sekundärkreis 14 bzw. 18 ist durch jeweilige, nicht eigens gekennzeichnete Pfeile veranschaulicht. Ein solcher Sekundärkreis 18 definiert allgemein einen Versorgungskreis für einen Verbraucher 16.

Nachfolgend werden die Begriffe "Primärkreis" und "Sekundärkreis" mit "PC" ("Primary Circuit") bzw. "SC" ("Secondary Circuit") abgekürzt, sofern sie bei der Bezeichnung von Bauteilen und Komponenten vorangestellt werden, um deren Zugehörigkeit zum Primärkreis 14 oder zum Sekundärkreis 18 zu verdeutlichen.

Bei dem HT-Medium 12 kann es sich je nach Anwendung um ein Heizmedium oder um ein Kühlmedium handeln. Die Erfindung wird anhand von Ausführungsbeispielen erläutert, bei denen das HT-Medium 12 Wasser ist, das als Heizmedium genutzt wird.

Der Primärkreis 14 umfasst eine PC-Vorlaufleitung 20, in welche heißes HT-Medium 12 in Form von Heißwasser 22 an einem Zulauf 24 eingespeist wird. Die PC-Vorlaufleitung 20 geht in eine PC-Rücklaufleitung 26 über, aus welcher kaltes HT-Medium 12 in Form von Kaltwasser 28 an einem Ablauf 30 austritt. Die Bezeichnungen "heiß" und "kalt" zeigen lediglich die relativen Temperaturen der Medien im Vergleich auf; heißes HT-Medium 12 ist wärmer als kaltes HT-Medium 12.

Auf dem Weg vom Ablauf 30 zum Zulauf 24 wird das HT-Medium 12 konditioniert und insbesondere wieder erhitzt oder abgekühlt, um hiernach wieder als Heiz- oder Kühlmedium in die PC-Vorlaufleitung 20 eingespeist zu werden.

Die PC-Vorlaufleitung 20 und die PC-Rücklaufleitung 26 sind in an und für sich bekannter Weise über eine Ausgleichseinrichtung 32 voneinander entkoppelt, um unterschiedlich hohe Umlaufströme in der PC-Vorlaufleitung 20 und der PC-Rücklaufleitung 26 auszugleichen. Hierfür ist eine hydraulische Weiche 34 vorgesehen.

Bei einer alternativen Anordnung, die durch die Teilfigur 1A veranschaulicht ist, ist anstelle der hydraulischen Weiche 34 ein Plattenwärmetauscher 36 vorgesehen, wobei die PC-Vorlaufleitung 20 und die PC-Rücklaufleitung 26 in dem Plattenwärmetauscher 36 durch eine PC-Wärmetauscherleitung 38 zu einer Kreisleitung miteinander verbunden sind, die dann den Primärkreis 14 definiert. Dem Plattenwärmetauscher 36 wird ein gesondertes Wärmeträgermedium 40 in einem separaten Temperierkreislauf 42 zugeführt, so dass das HT-Medium 12 im Primärkreis 14 durch das gesonderte Wärmeträgermedium 40 temperiert, d.h. erhitzt oder abgekühlt, werden kann.

In diesem Fall kann in dem Primärkreis 14 dann beispielsweise Glykol oder ein Gemisch aus Wasser und Glykol als HT-Wärmeträger 12 eingesetzt werden.

In Figur 1A zu erkennende gestrichelte Bezugslinien beziehen sich auf ein nicht eigens gezeigtes Ausführungsbeispiel, welches weiter unten erläutert wird.

Als Beispiel für einen Verbraucher 16 in dem Sekundärkreis 18 ist in Figur 1 ein Verbraucher-Wärmetauscher 44 gezeigt, der insbesondere als an und für sich bekannter Lamellenwärmetauscher oder Plattenwärmetauscher ausgebildet sein kann. Dieser Verbraucher-Wärmetauscher 44 kann seinerseits beispielsweise von einer Umluftanlage umfasst sein kann, um dort anfallende Luft, die konditioniert werden muss, zu temperieren.

Der Sekundärkreis 18 umfasst eine SC-Vorlaufleitung 46, die von der PC-Vorlaufleitung 20 zu dem Verbraucher-Wärmetauscher 44 führt. Dort geht die Sekundär-Vorlaufleitung 46 in eine SC-Wärmetauscherleitung 48 über, die durch den Verbraucher-Wärmetauscher 44 hindurch führt und hiernach in eine SC-Rücklaufleitung 50 mündet, die mit der PC-Rücklaufleitung 26 verbunden ist.

Die SC-Vorlaufleitung 46 und die SC-Rücklaufleitung 50 sind derart durch eine SC-Zirkulationsleitung 52 miteinander verbunden, dass HT-Medium 12 aus der SC-Rücklaufleitung 50 im Kreislauf wieder in die SC-Vorlaufleitung 46 geführt werden kann. Diese Rückführung erfolgt, bevor das HT-Medium 12 in die PC-Rücklaufleitung 26 zurückströmt. In der SC-Zirkulationsleitung 52 ist ein Ventil 54 angeordnet, so dass der Anteil des zurückzuführenden HT-Mediums 12, d.h. der Anteil des HT-Mediums 12, der aus der SC-Zirkulationsleitung 52 in die Vorlaufleitung 46 strömt, eingestellt werden kann. Das Ventil 54 wird mittels eines Ventilantriebs 56 betrieben.

Der Sekundärkreis 18 umfasst eine frequenzgeregelte Pumpeinrichtung 58 mit einer Förderpumpe 60 für das HT-Medium 12 und einem zugehörigen Frequenzumrichter 62. Beim vorliegenden Ausführungsbeispiel ist die Förderpumpe 60 zwischen der SC-Zirkulationsleitung 52 und dem Verbraucher-Wärmetauscher 44 in der SC-Vorlaufleitung 46 angeordnet. Anders ausgedrückt mündet die SC-Zirkulationsleitung 52 stromauf der Pumpeinrichtung 58 bzw. der Förderpumpe 60 in die SC-Vorlaufleitung 46.

Der Ventilantrieb 56 des Ventils 54 und der Frequenzumrichter 62 der Förderpumpe 60 werden mittels einer Steuereinrichtung 64 angesteuert, welche hierzu via Steuerleitungen 66 und 68 mit dem Ventilantrieb 56 bzw. dem Frequenzumrichter 62 verbunden ist. Die Steuereinrichtung 64 steuert das Ventil 56 und die Förderpumpe 60 abhängig von Messparametern, welche sie von einem dem Sekundärkreis 18 zugehörigen SC-Sensorsystem 70 erhält, welches zugehörige Sensorantworten an die Steuereinrichtung 64 überträgt. Das SC-Sensorsystem 70 umfasst mehrere Sensoren, welche ihre Sensordaten an die Steuereinrichtung 64 übermitteln, was durch gestrichelte Verbindungslinien angedeutet ist, die nicht eigens mit einem Bezugszeichen versehen sind. Eine solche Kommunikation kann über entsprechende Datenleitungen oder drahtlos erfolgen.

Stromauf der Förderpumpe 60 misst ein Eingangs-Drucksensor 72 den Eingangsdruck des HT-Mediums 12 auf der Einlassseite der Förderpumpe 60. Ein Ausgangs-Drucksensor 74 misst den Ausgangsdruck des HT-Mediums 12 auf der Auslassseite der Förderpumpe 60. Auf diese Weise ist die Möglichkeit für eine Differenzdruckmessung in die Pumpeinrichtung 58 integriert.

Das SC-Sensorsystem 70 umfasst außerdem einen Vorlauf-Temperatursensor 76, welcher die Temperatur des HT-Mediums 12 in der SC-Vorlaufleitung 46 auf der Einlassseite des Verbrauchers 16, d.h. vorliegend auf der Einlassseite des Verbraucher-Wärmetauschers 44 erfasst. Ein Rücklauf-Temperatursensor 78 ermittelt die Temperatur des HT-Mediums 12 in der SC-Rücklaufleitung 50 an der Auslassseite des Verbrauchers 16, d.h. vorliegend an der Auslassseite des Verbraucher-Wärmetauschers 44.

Ein Verbraucher-Sensorsystem 80 gibt der Steuereinrichtung 64 zudem eine Rückmeldung über Betriebsparameter des Verbrauchers 16, welche die erzielte Wirkung der Einstellungen im Sekundärkreis 18 auf den Verbraucher widerspiegeln. Vorliegend ist das Verbraucher-Sensorsystem 80 anhand eines Temperatursensors 82 veranschaulicht.

Wenn der Verbraucher-Wärmetauscher 44 beispielsweise wie oben erwähnt zu einer Umluftanlage gehört, kann der Temperatursensor 82 des in dem Luftstrom der Umluftanlage angeordnet sein, der den Verbraucher-Wärmetauscher 44 verlassen hat.

Durch die frequenzgeregelte Pumpeinrichtung 58 ist ein besonders energieeffizienter Betrieb des Sekundärkreises 18 zur Wärmeübertragung am Verbraucher 16 möglich:

In einem ersten Betriebsmodus kann die Temperatur des HT-Mediums 12, welches aus der SC-Vorlaufleitung 46 in den Verbraucher-Wärmetauscher 44 eintritt, durch eine Beimischregelung eingestellt werden. Hierbei wird der Volumenstrom des HT-Mediums 12 durch den Verbraucher-Wärmetauscher 44 konstant gehalten und die Regelung erfolgt über eine Ansteuerung des Ventils 54 in der SC-Zirkulationsleitung 52. Wenn beispielsweise der Temperatursensor 82 erfasst, dass die zu temperierende Umluft zu heiß ist, dass also die Temperatur der Umluft über einer Soll-Temperatur ist, und wenn der Rücklauf-Temperatursensor 78 erfasst, dass die Temperatur des HT-Mediums 12 in der SC-Rücklaufleitung 50 niedriger ist als die Soll-Temperatur der Umluft, kann die Temperatur des HT-Mediums 12 in der SC-Vorlaufleitung 46 abgesenkt werden, indem das Ventil 54 geöffnet oder weiter geöffnet wird, so dass HT-Medium 12 aus der SC-Rücklaufleitung in die SC-Vorlaufleitung hinüberströmt und sich das dort befindliche HT-Medium 12 insgesamt auf eine niedrigere Temperatur abkühlt, als ohne dieses Hinüberströmen von HT-Medium 12.

Der Volumenstrom des HT-Mediums 12 in der SC-Vorlaufleitung 46 wird durch eine entsprechende Regelung der Förderpumpe 60 konstant gehalten.

Wenn die zu temperierende Umluft dagegen zu kalt ist, kann das Ventil 54 geschlossen werden, so dass dem Verbraucher-Wärmetauscher 44 unvermischtes heißes HT-Medium 12 aus der PC-Vorlaufleitung 20 zugeführt wird, wodurch die zu temperierende Umluft erhitzt wird.

In einem zweiten Betriebsmodus kann die Temperatur des HT-Mediums 12, welches aus der SC-Vorlaufleitung 46 in den Verbraucher-Wärmetauscher 44 eintritt, durch eine Volumenstromregelung eingestellt werden. Hierbei ist das Ventil 54 geschlossen bzw. bleibt in einer Stellung geöffnet und die Zuführung des HT-Mediums 12 aus der PC-Vorlaufleitung 20 wird nur über die Drehzahl der Förderpumpe 60 geregelt. Wenn das Ventil 54 geschlossen ist, handelt es sich bei dem HT-Medium 12, das in den Verbraucher-Wärmetauscher 44 eingespeist wird, um heißes, unvermischtes HT-Medium 12 aus der PC-Vorlaufleitung 20.

In einem dritten Betriebsmodus erfolgt die Einstellung der Temperatur des HT-Mediums 12, welches aus der SC-Vorlaufleitung 46 in den Verbraucher-Wärmetauscher 44 eintritt, durch eine Kombinationsregelung, welche die oben erläuterte Beimischregelung und die oben erläuterte Volumenstromregelung kombiniert.

Wenn die Temperatur der zu temperierenden Umluft verringert werden soll, kann hierbei ohne eine Änderung der Einstellung des Ventils 54 nur die Drehzahl der Förderpumpe 60 zunächst bis zu einem unteren Schwellenwert reduziert werden, der zum Beispiel bei 50% der Maximaldrehzahl der Förderpumpe 60 liegt. Wenn dieser Schwellenwert erreicht ist, wird der Volumenstrom konstant gehalten und die weitere Temperaturregelung erfolgt durch eine entsprechende Ansteuerung des Ventils 54.

Mit Hilfe der frequenzgeregelten Pumpeinrichtung 58 können auch Druckveränderungen im Primärkreis 14 schnell und zuverlässig kompensiert werden, die durch weitere Verbraucher 16 in weiteren Sekundärkreisen 18 auftreten können.

Die Steuereinrichtung 64 ist außerdem derart eingerichtet, dass sie in der Lage ist, die für den Betrieb erforderliche Energie zu erfassen. Im Frequenzumrichter 62 ist die Pumpenkennlinie der Förderpumpe 60 hinterlegt. Durch eine entsprechende Strommessung in Verbindung mit der Drehzahl der Förderpumpe 60 und dem Ergebnis der Differenzdruckmessung durch die Drucksensoren 72 und 74 kann der Volumenstrom berechnet und als 4-20mA-Stromsignal ausgegeben werden, was wiederum im Zusammenspiel mit den Temperaturdaten der Temperatursensoren 76 und 78 in einen die benötigte Energie widerspiegelnden Wert umgerechnet werden kann. Abhängig von den erhaltenen Daten entscheidet die Steuereinrichtung 64, welche Betriebsart mit Blick auf den Energieverbrauch und die geforderte Effektivität bei dem Temperiervorgang am Verbraucher 16 die günstigste ist. Auf weitere Energiezähler in der Anlage 10 kann verzichtet werden.

Durch die Flexibilität bei der Wahl des Regelprinzips, d.h. Beimischregelung, Volumenstromregelung oder Kombinationsregelung, kann der Sekundärkreis 18 energieoptimiert betrieben werden und immer auf den günstigsten Energieverbrauch eingestellt werden.

Insgesamt wird die Förderpumpe 60 in der Regel in allen Betriebsmodi derart betrieben, dass der Druck am Ausgangs-Drucksensor 74 höher ist als am Eingangs-Drucksensor 72, d.h. dass der Druck des HT-Mediums 12 in der SC-Rücklaufleitung 50 stets größer ist als in der SC-Vorlaufleitung 46 vor der Förderpumpe 60 und in dem Verbraucher-Wärmetauscher 44 bzw. in der Verbraucher-Wärmetauscherleitung 48.

Es muss zudem kein pauschaler Vordruck in der PC-Vorlaufleitung 20 des Primärkreises 14 vorgehalten werden; es sind keine Netzpumpen im Primärkreis 14 notwendig, wodurch neben der besseren Energiebilanz auch der Wartungs- und Instandhaltungsaufwand der Anlage sinkt.

Bei einer nicht eigens gezeigten Abwandlung kann der Verbraucher-Wärmetauscher 44 auch als Plattenwärmetauscher ausgebildet sein. Dies kommt insbesondere bei der Variante gemäß Figur 1A in Betracht, wenn in dem Primärkreis 14 Glykol als HT-Medium 12 genutzt wird.

Bei einer weiteren nicht eigens gezeigten Abwandlung kann der Sekundärkreis 18 auch als geschlossener Kreis ausgebildet sein, der von dem Primärkreis 14 entkoppelt ist, indem zwischen dem Primärkreis 14 und dem Sekundärkreis 18 ein Plattenwärmetauscher 84 angeordnet ist. Die Anordnung an diesem Übergang zwischen dem Primärkreis 14 und dem Sekundärkreis 18 entspricht dann etwa der Anordnung, welche die Teilfigur 1A veranschaulicht, wo die für dieses Ausführungsbeispiel relevanten Leitungen und Komponenten mit den oben erwähnten gestrichelten Bezugslinien versehen sind.

Der dortige Temperierkreislauf 42 entspricht dann einem Zuführkreis 86, bei dem eine Zuführ-Vorlaufleitung 20a von der PC-Vorlaufleitung 20 abgeht und eine Zuführ-Rücklaufleitung 26a zur PC-Rücklaufleitung 26 hinführt, wobei die Zuführ-Vorlaufleitung 20a und die Zuführ-Rücklaufleitung 26a in dem Plattenwärmetauscher 84 durch eine Wärmetauscherleitung 88 verbunden sind.

Die SC-Vorlaufleitung 46 und die SC-Rücklaufleitung 50 sind in diesem Fall durch eine weitere, mit 90 bezeichnete Wärmetauscherleitung in dem Wärmetauscher 84 miteinander verbunden.

In diesem Fall kann in dem Sekundärkreis dann beispielsweise Glykol oder ein Gemisch aus Wasser und Glykol als HT-Wärmeträger 12 eingesetzt werden, während der Primärkreis 14 Wasser als Wärmeträger führen kann.

Die Regelung des Plattenwärmetauschers 84 kann bei dieser Variante ebenfalls durch die Steuereinrichtung 64 erfolgen, welche für einen energetischen Abgleich sorgt, um eine energieoptimierte Betriebsweise zu erreichen.

## Patentansprüche

1. Versorgungskreis für ein Wärmeträgermedium (12) für einen Verbraucher (16) mit
a) einer Vorlaufleitung (46) für das Wärmeträgermedium (12) und einer Rücklaufleitung (50) für das Wärmeträgermedium (12), welche durch einen Verbraucher-Wärmetauscher (44) miteinander verbunden sind;
b) einer Pumpeinrichtung zum Fördern des Wärmeträgermediums (12) durch den Versorgungskreis,
**dadurch gekennzeichnet, dass**
c) die Pumpeinrichtung eine frequenzgeregelte Pumpeinrichtung (58) mit einer Förderpumpe (60) und einem der Förderpumpe (60) zugeordneten Frequenzumrichter (62) ist.

2. Versorgungskreis nach Anspruch 1, **dadurch gekennzeichnet, dass** die Vorlaufleitung (46) und die Rücklaufleitung (50) durch eine Zirkulationsleitung (52) miteinander verbunden sind, derart, dass Wärmeträgermedium (12) aus der Rücklaufleitung (50) im Kreislauf in die Vorlaufleitung (46) führbar ist.

3. Versorgungskreis nach Anspruch 2, **dadurch gekennzeichnet, dass** ein Ventil (54) vorhanden ist, mittels welchem der Anteil des Wärmeträgermediums (12), welches durch die Zirkulationsleitung (52) in die Vorlaufleitung (46) strömt, einstellbar ist.

4. Versorgungskreis nach Anspruch 3, **dadurch gekennzeichnet, dass** das Ventil (54) in der Zirkulationsleitung (52) angeordnet ist.

5. Versorgungskreis nach einem der Ansprüche 2 bis 4, **dadurch gekennzeichnet, dass** die Zirkulationsleitung (52) stromauf der Förderpumpe (60) in die Vorlaufleitung (46) mündet.

6. Versorgungskreis nach einem der Ansprüche 1 bis 5, **dadurch gekennzeichnet, dass** die frequenzgeregelte Pumpeinrichtung (50) und/oder das Ventil (54) mittels einer Steuereinrichtung (64) ansteuerbar sind.

7. Versorgungskreis nach Anspruch 6, **dadurch gekennzeichnet, dass** die Steuereinrichtung (64) mit einem Sensorsystem (70) verbunden ist, mittels welchem der Eingangsdruck des Wärmeträgermediums (12) auf der Einlassseite der Förderpumpe (60) und/oder der Ausgangsdruck des Wärmeträgermediums (12) auf der Auslassseite der Förderpumpe (60) und/oder die Temperatur des Wärmeträgermediums (12) in der Vorlaufleitung (46) auf der Einlassseite des Verbraucher-Wärmetauschers (44) und/oder die Temperatur des Wärmeträgermediums (12) in der Rücklaufleitung (50) an der Auslassseite des Verbraucher-Wärmetauschers (44) erfassbar ist und die zugehörigen Sensorantworten an die Steuereinrichtung (64) übertragbar sind.

8. Versorgungskreis nach Anspruch 6 oder 7, **dadurch gekennzeichnet, dass** die Steuereinrichtung (64) mit einem Verbraucher-Sensorsystem (80) verbindbar ist, mittels welchem wenigstens ein Betriebsparameter des Verbrauchers (16) erfassbar und an die Steuereinrichtung (64) übertragbar ist.

9. Industrieanlage mit einem Primärkreis (14) für ein Wärmeträgermedium (12), welcher mit wenigstens einem Sekundärkreis (18) für das Wärmeträgermedium (12) für einen Verbraucher (16) verbunden ist, wobei eine Vorlaufleitung (46) des Sekundärkreises (18) mit einer Vorlaufleitung (20) des Primärkreises (14) und eine Rücklaufleitung (50) des Sekundärkreises (18) mit einer Rücklaufleitung (26) des Primärkreises (14) verbunden ist, **dadurch gekennzeichnet, dass** der Sekundärkreis (18) ein Versorgungskreis (18) nach einem der Ansprüche 1 bis 8 ist.

10. Verfahren zum Betreiben eines Versorgungskreises gemäß einem der Ansprüche 3 bis 8 oder einer Industrieanlage nach Anspruch 9, **dadurch gekennzeichnet, dass** der Versorgungskreis wahlweise in einem von zwei Betriebsmodi betrieben wird, wobei
a) in einem ersten Betriebsmodus die Temperatur des Wärmeträgermediums (12), welches aus der Vorlaufleitung (46) in den Verbraucher-Wärmetauscher (44) eintritt, durch eine Beimischregelung eingestellt wird, bei welcher die Temperatur des Wärmeträgermediums (12), welches aus der Vorlaufleitung (46) in den Verbraucher-Wärmetauscher (44) eintritt, durch eine Ansteuerung des Ventils (54) eingestellt wird;
b) in einem zweiten Betriebsmodus die Temperatur des Wärmeträgermediums (12), welches aus der Vorlaufleitung (46) in den Verbraucher-Wärmetauscher (44) eintritt, durch eine Volumenstromregelung eingestellt wird, indem der Frequenzumrichter (62) der Pumpeinrichtung (58) angesteuert wird.

11. Verfahren nach Anspruch 10 **dadurch gekennzeichnet, dass** in einem dritten Betriebsmodus die Temperatur des Wärmeträgermediums (12), welches aus der Vorlaufleitung (46) in den Verbraucher-Wärmetauscher (44) eintritt, durch eine Kombinationsregelung eingestellt wird, bei welcher die Beimischregelung und die Volumenstromregelung miteinander kombiniert werden.
